# EUROPÄISCHE PATENTANMELDUNG

(11) **EP 1 568 452 A1**
(43) Veröffentlichungstag der Anmeldung: **31.08.2005**
(21) Anmeldenummer: 05002753.1
(22) Anmeldetag: 10.02.2005
(51) Int. Cl.: B27B 1/00, B27B 31/00, B23D 47/04, B23D 59/00

(54) **Verfahren zum Sägen von Hölzern**

(30) Priorität: 24.02.2004 DE 102004010334
(71) Anmelder: GreCon Dimter Holzoptimierung Süd GmbH & Co. KG, 89257 Illertissen (DE)
(72) Erfinder: Reinbold, Georg, Dr., 88437 Maselheim (DE); Locherer, Herbert, 88471 Laupheim (DE)
(74) Vertreter: Jackisch-Kohl, Anna-Katharina

(57) **Zusammenfassung**

Zum Sägen von Hölzern (1) in einer Sägestation (3) werden die Hölzer (1) vermessen und entsprechend der Vermessung zersägt. Damit die Bearbeitung der Hölzer (1) in der Zeiteinheit optimal ist, wird das jeweils nachfolgende Holz (1) bereits in die Sägestation (3) transportiert, wenn das vorige Holz (1) in der Sägestation (3) noch gesägt wird. Die Zuführgeschwindigkeit des nachfolgenden Holzes (1) wird so gewählt, daß es in der Sägestation (3) nicht auf das vorige Holz (1) aufläuft.

## Beschreibung

Die Erfindung betrifft ein Verfahren zum Sägen von Hölzern nach dem Oberbegriff des Anspruches 1.

An Kappsägen ist eine Vermessung der Hölzer notwendig, da Massivholz unterschiedliche Qualitäten und auch Fehler aufweist. Auf den Hölzern werden üblicherweise manuell Kreidestriche zur Fehler- und Qualitätsmarkierung aufgebracht. Die Länge der Hölzer wird in einer Meßstation oder vollautomatisch in einem Scanner ermittelt. Die erfaßten Daten werden in einem Rechner in einer sogenannten Schnittliste gespeichert. Die Kappsäge schneidet gemäß dieser Schnittliste das Holz in mehrere Teile. Der Abstand zwischen der Meßstation und der Kappsäge muß mindestens der maximalen Länge der zu bearbeitenden Hölzer entsprechen. Sie werden mittels eines Transportbandes oder eines Zahnriemens durch die Meßstation und die Sägestation transportiert. Sobald das Holz in der Sägestation gesägt wird, wird der Antrieb des Transportbandes angehalten. Dementsprechend werden auch die nachfolgenden Werkstücke nicht weiter transportiert. Auf diese Weise werden die Hölzer im Stop-and-Go-Verfahren von der Meßstation aus der Sägestation zugeführt. Die Zahl der in einer Zeiteinheit bearbeiteten Hölzer ist verhältnismäßig gering.

Der Erfindung liegt die Aufgabe zugrunde, das gattungsgemäße Verfahren so auszubilden, daß die Bearbeitung der Hölzer in der Zeiteinheit optimal ist.

Diese Aufgabe wird beim gattungsgemäßen Verfahren erfindungsgemäß mit den kennzeichnenden Merkmalen des Anspruches 1 gelöst.

Beim erfindungsgemäßen Verfahren wird das jeweils nachfolgende Holz auch dann in Richtung auf die Sägestation zugeführt, wenn darin das vorhergehende Holz noch bearbeitet wird. Die Zuführgeschwindigkeit des jeweils nachfolgenden Holzes wird vorzugsweise so gewählt, daß es in die Sägestation einläuft, wenn das vorige Holz gerade die Sägestation verläßt. Hierbei wird die Zuführgeschwindigkeit so eingestellt, daß das nachfolgende Holz einerseits nicht auf das in der Sägestation befindliche Holz aufläuft, andererseits der Abstand zwischen diesen Hölzern minimal ist. Dadurch kann in der Zeiteinheit eine sehr hohe Zahl an Hölzern bearbeitet werden.

Vorteilhaft ist es, wenn die Zuführgeschwindigkeit der Hölzer in die Sägestation geregelt wird. Dadurch kann in Abhängigkeit von der Bearbeitungszeit in der Sägestation die Zuführgeschwindigkeit des nachfolgenden Holzes optimal von der Steuerung geregelt werden.

Die Hölzer werden vor der Bearbeitung in der Sägestation vorteilhaft in ihrer Länge und/oder hinsichtlich ihrer Qualität vermessen.

Zweckmäßig werden die vermessenen Werte gespeichert, vorteilhaft in einem Rechner einer Steuerung.

Anhand der gespeicherten Werte kann die Zuführgeschwindigkeit der Hölzer zur Sägestation optimal geregelt werden, so daß der Abstand der Hölzer in der Sägestation minimiert werden kann.

Um eine einfache Verfahrensweise zu ermöglichen, werden die der Sägestation zugeführten Hölzer vorteilhaft ohne Unterbrechung transportiert.

Vorteilhaft ist der Antrieb zum Transport der nachfolgenden Hölzer vom Antrieb der Hölzer in der Sägestation entkoppelt. Somit kann der Transport der Hölzer in der Sägestation im Stop-and-Go-Verfahren erfolgen, während die Zuführung der Hölzer zur Sägestation kontinuierlich, gegebenenfalls auch mit variabler Geschwindigkeit, erfolgt.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert.

Es zeigen
- Fig. 1 bis Fig. 3: verschiedene Stadien bei Durchführung des erfindungsgemäßen Verfahrens,
- Fig. 4: in schematischer Darstellung eine Steuerung zur Durchführung des Verfahrens.

Die zu sägenden Hölzer 1 werden mittels einer Transportvorrichtung in Pfeilrichtung 2 einer Sägestation 3 zugeführt. Sie hat eine Kappsäge 4, mit der die Hölzer 1 quer, vorzugsweise senkrecht zu ihrer Transportrichtung 2 abgelängt werden. Die Kappsäge 4 ist hierzu mit einem Sägeblatt 5 versehen, das in einer entsprechenden Führung in Höhenrichtung während des Sägevorganges bewegt wird.

Die Hölzer 1 werden zunächst an einer Meßstation 6 vorbeigeführt, an der die Hölzer 1 zumindest hinsichtlich ihrer Länge vermessen werden. Da die Hölzer unterschiedliche Qualitäten und/oder auch Fehler aufweisen, werden diese in der Regel manuell markiert, beispielsweise mit Kreidestrichen. Grundsätzlich ist es auch möglich, die Qualität, etwaige Fehler und auch die Länge der Hölzer 1 mittels eines Scanners vollautomatisch zu erfassen. Da dies bekannt ist, wird dies nicht näher erläutert. Die so erfaßten Daten werden in einem Rechner in einer sogenannten Schnittliste abgelegt, anhand der in der Sägestation 3 das jeweilige Holz 1 im notwendigen Maße gesägt wird.

Die Hölzer 1 werden der Meßstation 6 auf einer ersten Transportvorrichtung 7 zugeführt. Sie kann durch Transportketten, Transportbänder, Zahnriemen und dergleichen gebildet sein.

Nachdem die Hölzer 1 die Meßstation 6 verlassen haben, gelangen sie auf eine Übergabestation 8, durch die die Hölzer 1 in die Sägestation 3 transportiert werden. Die Meßstation 6 und die Übergabestation 8 haben dieselbe Transportvorrichtung 7. Sie hat einen regelbaren Antrieb, der ein Servomotor oder ein frequenzgeregelter Motor sein kann. Mit ihm ist es möglich, die Transportgeschwindigkeit in noch zu beschreibender Weise in Abhängigkeit vom Sägevorgang in der Sägestation 3 zu regeln. Im dargestellten Ausführungsbeispiel liegen die Meßstation 6 und die Sägestation 3 in einer Linie. Selbstverständlich können diese beiden Stationen 3, 6 auch nicht in einer Linie angeordnet sein.

Die Hölzer 1 werden durch die Sägestation 3 mit einer zweiten Transportvorrichtung 9 transportiert, die wie die erste Transportvorrichtung 7 ein Transportband, eine Transportkette, ein Zahnriemen, Rollen oder dergleichen sein kann. Die Transportvorrichtung 9 hat einen zweiten (nicht dargestellten) Antrieb, der in herkömmlicher Weise ausgebildet sein kann.

Die Übergabestation 8 ist der Bereich zwischen der Meßstation 6 und der Sägestation 3. Die Länge der Übergabestation 8 entspricht mindestens der maximalen Länge der zu bearbeitenden Hölzer 1. Im Ausführungsbeispiel beträgt die Länge der Übergabestation 8 ein Mehrfaches der Länge der Hölzer 1. Der Abstand zwischen der Meßstation 6 und der Sägestation 3 muß nur so groß sein wie die maximale Holzlänge. Damit die Leistung der Kappsäge erhöht wird, erfolgt die Zuführung der Hölzer 1 zur Sägestation 3 derart, daß das nächste Holz 1 dann in die Sägestation 3 gelangt, wenn das vorhergehende Holz 1 gerade die Sägestation 3 verlassen hat. Der Abstand zwischen aufeinanderfolgenden Hölzern 1 in der Sägestation 3 wird optimal so gewählt, daß das nachfolgende Holz 1 mit seiner Stirnseite mit einem geringen Abstand der rückwärtigen Stirnseite des vorhergehenden Holzes folgt, ohne Kontakt mit dem vorhergehenden Holz zu bekommen. Nach Erreichen einer kleinen Lücke werden beide Hölzer vorteilhaft mit gleicher Geschwindigkeit transportiert.

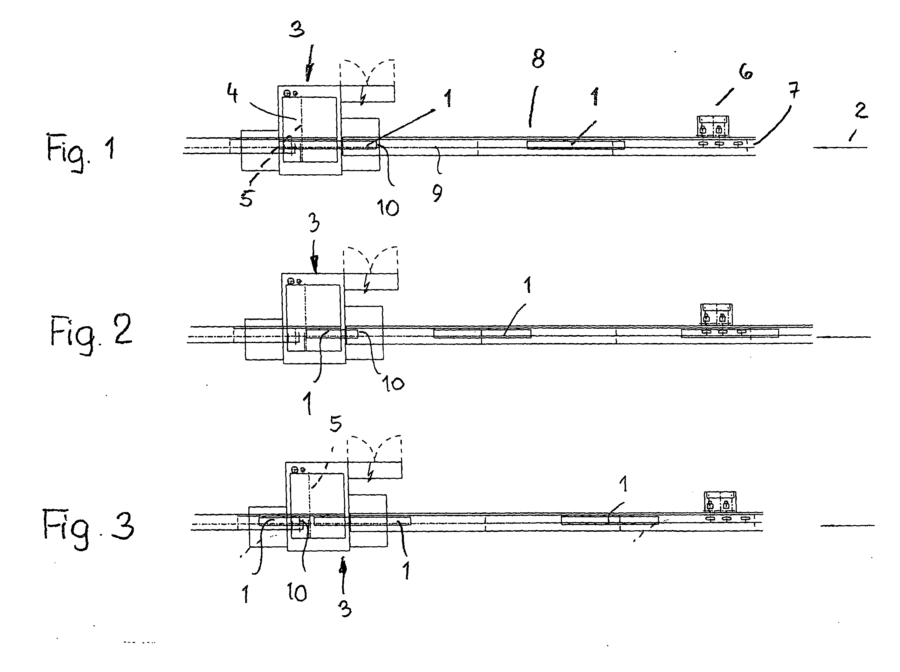

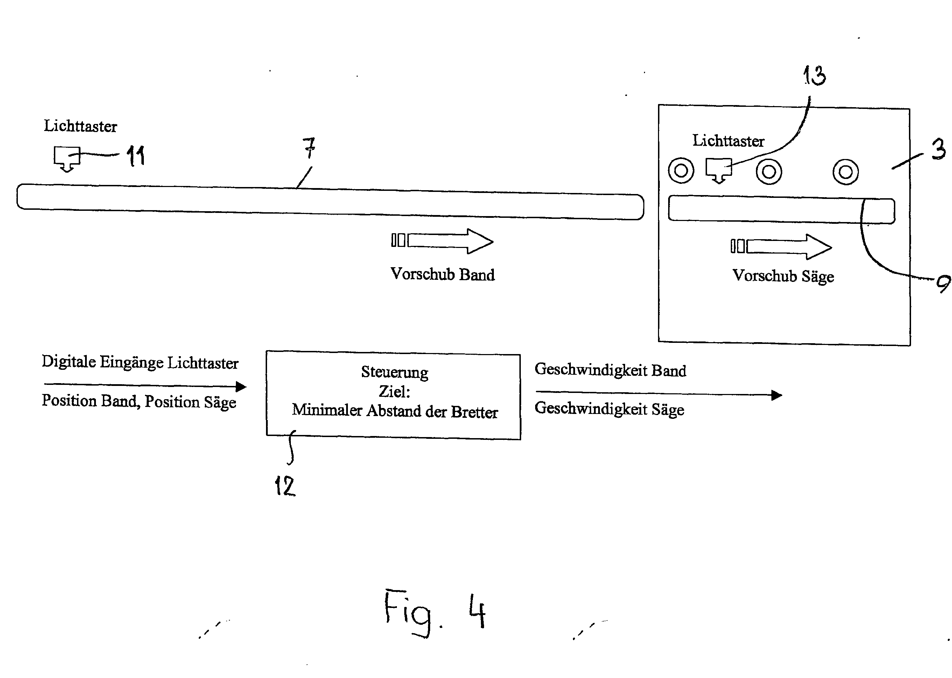

Damit die Hölzer 1 mit minimalem Abstand in die Sägestation 3 einlaufen, wird der Antrieb der Transportvorrichtung 7 in Abhängigkeit von der Lage des in Transportrichtung 2 rückwärtigen Endes 10 des in der Sägestation 3 befindlichen Holzes 1 geregelt. Fig. 1 zeigt den Fall, daß das Holz 1 gerade in die Sägestation 3 eingelaufen ist, während sich das nachfolgende Holz 1 schon in der Übergabestation 8 befindet. Das in der Sägestation 3 befindliche Holz wird entsprechend der vorhergehenden Vemessung mit dem Sägeblatt 5 in mehrere Teile geschnitten. Hierbei wird das Holz 1 nach jedem Schnitt um ein entsprechendes Maß weitertransportiert. Aufgrund des entkoppelten Antriebes der Transportvorrichtung 7 wird das nachfolgende Holz 1 in der Übergabestation 8 während des Sägevorganges weitertransportiert. Fig. 2 zeigt, daß das nachfolgende Holz 1 nur noch einen geringen Abstand vom rückwärtigen Ende 10 des in der Sägestation 3 befindlichen Holzes 1 hat. Während des Sägevorganges wird somit das jeweils nachfolgende Holz 1 vorteilhaft ohne Stoppen der Sägestation 3 zugeführt.

Fig. 3 zeigt die Situation, in der das rückwärtige Ende 10 des letzten Teiles des geschnittenen Holzes 1 sich hinter dem Sägeblatt 5 befindet. Das nachfolgende Holz 1 ist bereits in die Sägestation transportiert worden und hat nur noch minimalen Abstand vom rückwärtigen Ende 10 des vorherigen Holzes 1. Darum kann, sobald das Holz 1 die Sägestation 3 verlassen hat, unmittelbar anschließend das nächste Holz 1 gesägt werden. Während nun dieses Holz 1 in der Sägestation 3 aufgeteilt wird, wird in der beschriebenen Weise bereits das nächste Holz 1 zugeführt.

Die Geschwindigkeit, mit der das nachfolgende Holz 1 von der Meßstation 6 bzw. von der Übergabestation 8 aus zugeführt wird, wird so geregelt, daß die Lücken zwischen den aufeinanderfolgenden Hölzern 1 in der Sägestation 3 ein Minimum haben. Die Hölzer 1 werden mit der Transportvorrichtung 7 vorteilhaft ständig transportiert, wobei die Transportgeschwindigkeit variieren kann.

Da die Bearbeitungszeit der Hölzer 1 in der Sägestation 3 je nach Anzahl der Schnitte stark variieren kann, wird die Geschwindigkeit der nachgeführten Hölzer 1 entsprechend angepaßt. Da die Länge sowie die Fehler und Qualitätsmarkierungen der Hölzer 1 in der im Rechner gespeicherten Schnittliste vorliegen, kann die Regelung anhand dieser Schnittliste die Transportgeschwindigkeit der Transportvorrichtung 7 exakt einstellen, so daß die Abstände zwischen aufeinanderfolgenden Hölzern 1 in der Sägestation 3 auf ein Minimum reduziert werden. Je nach Bearbeitungszeit in der Sägestation 3 kann der Transport der nachfolgenden Hölzer 1 durchaus auch unterbrochen werden.

Der Transport der Hölzer 1 durch die Meßstation 6 und die Übergabestation 8 erfolgt mit unterschiedlichen Geschwindigkeiten, die durch eine intelligente Steuerung ermittelt werden. Die Position der Hölzer 1 in der Meßstation 6, in der Übergabestation 8 sowie auch in der Sägestation 3 wird durch Wegmeßsysteme verfolgt, die die beiden Enden des jeweiligen Holzes 1 erfassen.

Wie Fig. 4 schematisch zeigt, wird die Position der Hölzer 1 auf der Transportvorrichtung 7 beispielsweise mittels eines Lichttasters 11 erfaßt, dessen Signale der Steuerung 12 zugeführt werden. Im Bereich der Vorschubrichtung 9 in der Sägestation 3 befindet sich ein weiterer Lichttaster 13, dessen Signale ebenfalls der Steuerung 12 zugeführt werden. Die Eingangssignale der beiden Lichttaster 11, 13 geben die Position der Transportvorrichtungen bzw. der Hölzer 1 sowie die Position der Säge an. Anhand der Eingangssignale wird die Geschwindigkeit der Transportvorrichtungen 7, 9 sowie die Geschwindigkeit der Säge so eingestellt, daß aufeinanderfolgende Hölzer 1 einen minimalen Abstand voneinander haben.

Die gemessenen Werte sowie die Geschwindigkeit der Transportvorrichtungen 7, 9 werden dem Rechner bzw. der Steuerung zugeführt. Anhand dieser Werte wertet die Steuerung laufend die Positionen der Anfänge und Enden der Hölzer 1 zueinander aus. Die erforderliche Zuführgeschwindigkeit des jeweils nachfolgenden Holzes 1 wird variabel geregelt, wobei die Zuführgeschwindigkeit laufend neu in der Steuerung errechnet wird. Dabei werden in der beschriebenen Weise die erfaßten und die abgespeicherten Werte zur Regelung der Zuführgeschwindigkeit herangezogen. Dadurch kann der Abstand zwischen aufeinanderfolgenden Hölzern 1 bei ihrem Transport zur Sägestation 3 minimal gehalten werden.

## Patentansprüche

1. Verfahren zum Sägen von Hölzern in einer Sägestation, bei dem Hölzer zunächst vermessen und anschließend entsprechend der Vermessung in zumindest zwei Teile zersägt werden, wobei die Hölzer nacheinander der Sägestation zugeführt werden, **dadurch gekennzeichnet, daß** das jeweils nachfolgende Holz (1) bereits in die Sägestation (3) transportiert wird, wenn das vorige Holz (1) in der Sägestation (3) noch gesägt wird, wobei die Zuführgeschwindigkeit des nachfolgenden Holzes (1) so gewählt wird, daß das nachfolgende Holz (1) in der Sägestation (3) nicht auf das vorige Holz (1) aufläuft.

2. Verfahren nach Anspruch 1,
**dadurch gekennzeichnet, daß** die Zuführgeschwindigkeit des nachfolgenden Holzes (1) geregelt wird.

3. Verfahren nach Anspruch 2,
**dadurch gekennzeichnet, daß** die Zuführgeschwindigkeit des nachfolgenden Holzes (1) variabel geregelt ist.

4. Verfahren nach einem der Ansprüche 1 bis 3,
**dadurch gekennzeichnet, daß** die Zuführgeschwindigkeit des nachfolgenden Holzes (1) laufend in einer Steuerung neu errechnet wird.

5. Verfahren nach einem der Ansprüche 1 bis 4,
**dadurch gekennzeichnet, daß** die Zuführgeschwindigkeit der Hölzer (1) zur Sägestation (3) so geregelt wird, daß der Abstand aufeinanderfolgender Hölzer (1) minimal ist.

6. Verfahren nach Anspruch 4 oder 5,
**dadurch gekennzeichnet, daß** die Steuerung mit einer fließenden Positionsverfolgung der Hölzer (1) arbeitet.

7. Verfahren nach einem der Ansprüche 1 bis 6,
**dadurch gekennzeichnet, daß** die Hölzer (1) in ihrer Länge vermessen werden.

8. Verfahren nach einem der Ansprüche 1 bis 7,
**dadurch gekennzeichnet, daß** die Hölzer (1) hinsichtlich ihrer Qualität vermessen werden.

9. Verfahren nach einem der Ansprüche 1 bis 8,
**dadurch gekennzeichnet, daß** die vermessenen Werte gespeichert werden.

10. Verfahren nach Anspruch 9,
**dadurch gekennzeichnet, daß** die erfaßten und die abgespeicherten Werte zur Regelung der Zuführgeschwindigkeit herangezogen werden.

11. Verfahren nach einem der Ansprüche 1 bis 10,
**dadurch gekennzeichnet, daß** die nachfolgenden Hölzer (1) ohne Unterbrechung der Zuführgeschwindigkeit der Sägestation (3) zugeführt werden.

12. Verfahren nach einem der Ansprüche 1 bis 11,
**dadurch gekennzeichnet, daß** der Antrieb zum Transport der nachfolgenden Hölzer (1) vom Antrieb der Hölzer (1) in der Sägestation (3) entkoppelt ist.
